# FASCICULE DE BREVET EUROPEEN

(11) **EP 4 637 161 B1**
(45) Date de publication et mention de la délivrance du brevet: **25.11.2026**
(21) Numéro de dépôt: 25169870.0
(22) Date de dépôt: 10.04.2025
(51) Int. Cl.: H04N 21/233, H04N 21/43, H04N 21/434, H04N 21/436, H04N 21/4363, H04N 21/439, G06F 3/16, H04R 3/12

(54) **RESTITUTION D'UN SIGNAL AUDIO MULTICANAL**
MEHRKANAL-AUDIOSIGNALWIEDERGABE
RENDERING A MULTI-CHANNEL AUDIO SIGNAL

(30) Priorité: 15.04.2024 FR 2403876
(43) Date de publication de la demande: 22.10.2025
(73) Titulaire: Sagemcom Broadband SAS, 92270 Bois-Colombes (FR)
(72) Inventeur: MALISSARD, Sébastien, 92270 BOIS-COLOMBES (FR); SCHOTT, Vincent, 92270 BOIS-COLOMBES (FR); SODI, Frédéric, 92270 BOIS-COLOMBES (FR)
(74) Mandataire: Cabinet Boettcher

(56) Documents cités:
- WO-A1-2014/040667
- US-A1- 2023 199 271

## Description

L'invention concerne le domaine des systèmes multimédia domestiques.

### ARRIERE PLAN

Un système multimédia domestique comporte classiquement un boîtier décodeur (ou STB, pour *Set-Top Box*), un téléviseur connecté au boîtier décodeur par une liaison HDMI (pour *High Definition Multimedia Interface*), et éventuellement des équipements de restitution audio additionnels, tels que des enceintes satellites, une barre de son, un caisson de basse, un casque audio, etc.

Certains boîtiers décodeurs récents sont en outre enrichis de fonctions audio avancées, avec par exemple des capacités de restitution audio par le biais de haut-parleurs directement intégrés dans le boîtier décodeur. On connaît ainsi un boîtier décodeur intégrant plusieurs haut-parleurs « *midrange* » (appelés aussi « médium » ou « médial ») et un haut-parleur de graves (appelé aussi *« boomer »* ou « *woofer* »).

L'utilisation de plusieurs dispositifs de restitution audio améliore la qualité du rendu sonore et, plus généralement, l'expérience utilisateur, en permettant une restitution multicanale qui utilise les positions relatives des différents dispositifs et leurs caractéristiques audio particulières.

Le système audio peut par exemple être configuré selon le mode de configuration audio « 5.1.2 ». Cela signifie que le système audio peut restituer jusqu'à huit canaux audio répartis de la manière suivante :
- « 5.x.x » : cinq canaux audio horizontaux, c'est-à-dire trois canaux devant l'utilisateur (gauche, droite, centre) et deux canaux à l'arrière (gauche et droite) ;
- « x.1.x » : un canal audio dédié aux basses fréquences ;
- « x.x.2 » : deux canaux audio d'élévation (« *upfiring* ») situés à gauche et à droite de l'utilisateur (optionnels), simulant l'arrivée de canaux provenant du plafond de la salle (par exemple selon la technologie *Dolby Atmos* ; *DTS-X*).

On peut par exemple envisager de mettre en œuvre cette configuration avec les haut-parleurs du téléviseur, une barre de son elle-même connectée à un caisson de basses, et des enceintes satellites. On peut aussi par exemple utiliser un boîtier décodeur muni de haut-parleurs, et des enceintes satellites.

Les enceintes satellites modernes sont des enceintes sans fil. La mise en œuvre de cette restitution multicanale nécessite donc que le boîtier décodeur intègre un module de communication sans fil pour transmettre les canaux audio aux enceintes (et éventuellement aussi à la barre de son dans le cas d'une barre de son sans fil). Cependant, il est possible que le boîtier décodeur n'intègre pas de module communication sans fil.

Il est connu dans ce cas d'utiliser un répéteur audio qui permet d'extraire les canaux audio contenus dans un signal audio-vidéo au format HDMI transitant sur un port HDMI de sortie du boîtier décodeur, et de transmettre l'intégralité de ces canaux audio à des enceintes (ou autres dispositifs de restitution audio) tout en transmettant l'intégralité du signal audio-vidéo au téléviseur (et donc l'intégralité des canaux audio). Ainsi, le téléviseur et les enceintes reçoivent l'ensemble des canaux audio fournis par le boîtier décodeur.

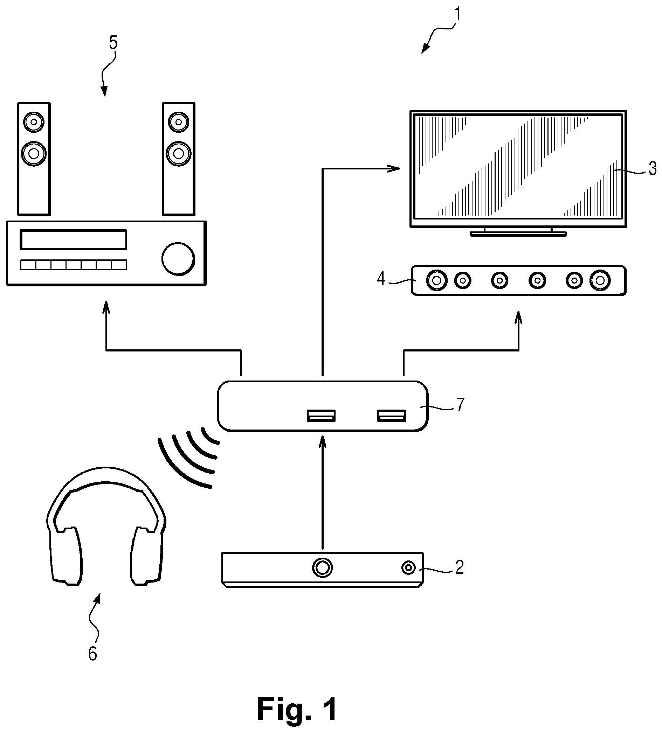

Cette situation est illustrée sur la figure 1, dans le cas d'un système multimédia 1 comprenant le boîtier décodeur 2, un téléviseur 3, une barre de son 4, un système hi-fi 5, un casque audio 6 et donc le répéteur audio 7. Le répéteur audio 7 est ici connecté au téléviseur 3 et au boîtier décodeur 2 par des liaisons HDMI, à la barre de son 4 par une liaison S/PDIF, au système Hi-Fi 5 par une liaison RCA/Cinch, et au casque audio 6 par une liaison *Bluetooth.*

Dans ce cas, le répéteur audio 7 envoie indistinctement tous les canaux audio contenus dans le signal audio-vidéo vers les différents dispositifs de restitution audio en utilisant différents types de liaison filaire et/ou sans fil (ici HDMI RCA/Cinch, S/PDIF et *Bluetooth*).

Le répéteur 7 doit donc fonctionner uniquement avec des dispositifs de restitution audio homogènes (même liaison, mêmes caractéristiques audio) car le répéteur ne permet pas de router les canaux audio avec des délais différents par canal.

Dans le cas où des dispositifs hétérogènes sont utilisés, comme le répéteur 7 ne peut pas optimiser le rendu sonore en fonction des dispositifs de restitution audio, cela oblige lesdits dispositifs à posséder leur propre chaîne de traitement audio. Ces dispositifs sont donc plus complexes et coûteux.

De l'art antérieur sont connus des dispositifs de restitution audio tels que décrits dans US 2023/199271 A1, et WO 2014/040667 A1.

### OBJET

L'invention a pour objet, dans un système multimédia comprenant un équipement source, un équipement de restitution audio-vidéo et des équipements de restitution audio, l'équipement source n'intégrant pas nécessairement de module de communication sans fil, d'améliorer la restitution sonore d'un signal audio multicanal compris dans un signal audio-vidéo numérique qui est diffusé par l'équipement source et ce, sans complexifier les équipements de restitution audio.

### RESUME

En vue de la réalisation de ce but, on propose un équipement accessoire comportant :
- un port d'entrée agencé pour être connecté à un équipement source par une première liaison filaire, et un port de sortie agencé pour être connecté à un équipement de restitution audio-vidéo par une deuxième liaison filaire ;
- un circuit de communication sans fil ;
- un circuit de routage agencé pour :
   ∘ recevoir de l'équipement source, via le port d'entrée et la première liaison filaire, un signal audio-vidéo numérique comprenant un signal vidéo et des canaux audio, les canaux audio comprenant au moins un premier canal audio appartenant à un signal audio multicanal, et au moins un deuxième canal audio ;
   ∘ transmettre au circuit de communication sans fil uniquement le au moins un premier canal audio pour que le circuit de communication sans fil le transmette à au moins un équipement de restitution audio via une liaison sans fil ;
   ∘ transmettre à l'équipement de restitution audio-vidéo uniquement le signal vidéo et le au moins un deuxième canal audio.

L'équipement accessoire, qui est donc connecté à l'équipement source par la première liaison filaire, reçoit les canaux audio et les transmet aux équipements de restitution par la deuxième liaison filaire et par la liaison sans fil. L'équipement source n'a donc pas besoin d'intégrer de module de communication sans fil pour mettre en œuvre la restitution audio multicanale.

Le circuit de routage dirige chaque canal audio uniquement vers l'équipement qui est destiné à le restituer selon la configuration multicanale adoptée. Par conséquent, en synchronisant les canaux audio dans l'équipement source et donc en amont de l'équipement accessoire (et préalablement à leur transmission à l'équipement accessoire), on assure une restitution multicanale synchronisée sans que l'équipement accessoire ni les équipements de restitution audio n'aient besoin de réaliser ce traitement de synchronisation. On assure donc une excellent qualité de la restitution sonore sans complexifier les équipements de restitution audio, et avec un équipement accessoire très simple et très peu coûteux.

On propose de plus un équipement accessoire tel que précédemment décrit, dans lequel le circuit de routage comporte un composant de routage comprenant :
- une entrée principale connectée au port d'entrée de l'équipement accessoire, par laquelle le signal vidéo et les canaux audio entrent dans le composant de routage, et une sortie principale connectée au port de sortie de l'équipement accessoire ;
- au moins une première sortie connectée au circuit de communication sans fil, et une deuxième sortie et une entrée, la deuxième sortie étant rebouclée sur l'entrée,
un routage interne étant mis en œuvre dans le composant de routage, de sorte que le signal vidéo chemine dans le composant de routage depuis l'entrée principale vers la sortie principale, le au moins un premier canal audio chemine dans le composant de routage depuis l'entrée principale vers la au moins une première sortie, et le au moins un deuxième canal audio chemine dans le composant de routage depuis l'entrée principale vers la deuxième sortie, puis chemine depuis l'entrée vers la sortie principale.

On propose de plus un équipement accessoire tel que précédemment décrit, dans lequel la deuxième sortie est rebouclée sur l'entrée à l'extérieur du composant de routage.

On propose de plus un équipement accessoire tel que précédemment décrit, dans lequel la au moins une première sortie, la deuxième sortie et l'entrée sont de type I2S.

On propose de plus un équipement accessoire tel que précédemment décrit, dans lequel le circuit de communication sans fil est agencé pour recevoir du au moins un équipement de restitution audio, via la liaison sans fil, une information lui indiquant le ou les premiers canaux audio à lui transmettre.

On propose de plus un équipement accessoire tel que précédemment décrit, dans lequel la première liaison filaire et la deuxième liaison filaire sont des liaisons HDMI, et dans lequel le circuit de communication sans fil intègre un module Wi-Fi ou Bluetooth.

On propose de plus un équipement accessoire tel que précédemment décrit, comprenant une unité de traitement configurée pour appliquer au moins un premier délai spécifique à au moins un dudit au moins un premier canal audio et au moins un deuxième délai spécifique à au moins un dudit au moins un deuxième canal audio du signal audio multicanal, le ou les premiers délais spécifiques et le ou les deuxièmes délais spécifiques étant définis en fonction de capacités de restitution audio du au moins un équipement de restitution audio, de l'équipement de restitution audio-vidéo ou d'un dispositif de restitution audio interne intégré dans l'équipement source pour sa restitution par ledit dispositif de restitution audio, et/ou en fonction de caractéristiques de la deuxième liaison filaire et de la liaison sans fil.

On propose de plus un équipement accessoire tel que précédemment décrit, dans lequel l'unité de traitement est en outre agencée pour mettre en œuvre au moins un premier traitement spécifique pour chaque premier canal audio et au moins un deuxième traitement spécifique pour chaque deuxième canal audio, le ou les premiers traitements spécifiques et le ou les deuxièmes traitements spécifiques étant définis en fonction des capacités de restitution audio du au moins un équipement de restitution audio, de l'équipement de restitution audio-vidéo ou du dispositif de restitution audio interne de l'équipement source, et/ou en fonction d'une configuration audio du au moins un équipement de restitution audio.

On propose de plus un équipement source, comportant :
- un port de sortie agencé pour être connecté à un équipement accessoire via une première liaison filaire ;
- une unité de traitement agencée pour :
   ∘ acquérir un signal audio-vidéo numérique comprenant un signal vidéo et un signal audio multicanal ;
   ∘ appliquer au moins un premier délai spécifique à au moins un premier canal audio et au moins un deuxième délai spécifique à au moins un deuxième canal audio du signal audio multicanal ;
   ∘ transmettre le signal vidéo et le au moins un premier canal audio à l'équipement accessoire via le port de sortie et la première liaison filaire, pour que l'équipement accessoire retransmette le signal vidéo à l'équipement de restitution audio-vidéo via une deuxième liaison filaire et le au moins un premier canal audio à au moins un équipement de restitution audio via une liaison sans fil ;
   ∘ transmettre le au moins un deuxième canal audio à l'équipement accessoire via le port de sortie et la première liaison filaire pour sa restitution par l'équipement de restitution audio-vidéo, ou bien à un dispositif de restitution audio interne intégré dans l'équipement source pour sa restitution par ledit dispositif de restitution audio ;
le ou les premiers délais spécifiques et le ou les deuxièmes délais spécifiques étant définis en fonction de capacités de restitution audio du au moins un équipement de restitution audio, de l'équipement de restitution audio-vidéo ou du dispositif de restitution audio interne, et/ou en fonction de caractéristiques de la deuxième liaison filaire et de la liaison sans fil.

On propose de plus un équipement source tel que précédemment décrit, l'unité de traitement étant en outre agencée pour mettre en œuvre au moins un premier traitement spécifique pour chaque premier canal audio et au moins un deuxième traitement spécifique pour chaque deuxième canal audio,
le ou les premiers traitements spécifiques et le ou les deuxièmes traitements spécifiques étant définis en fonction des capacités de restitution audio du au moins un équipement de restitution audio, de l'équipement de restitution audio-vidéo ou du dispositif de restitution audio interne de l'équipement source, et/ou en fonction d'une configuration audio du au moins un équipement de restitution audio.

On propose de plus un équipement source tel que précédemment décrit, dans lequel l'équipement source n'intègre pas de dispositif de restitution audio, et dans lequel l'unité de traitement est aussi agencée pour transmettre le au moins un deuxième canal audio à l'équipement accessoire via le port de sortie et la première liaison filaire pour sa restitution par l'équipement de restitution audio-vidéo.

On propose de plus un équipement source tel que précédemment décrit, dans lequel l'équipement source intègre un dispositif de restitution audio interne, l'unité de traitement étant agencée pour transmettre le au moins un deuxième canal audio au dispositif de restitution audio interne pour sa restitution par ledit dispositif de restitution audio interne, l'unité de traitement étant en outre agencée pour transmettre à l'équipement accessoire, via le port de sortie et la première liaison filaire, au moins un deuxième canal audio virtuel comprenant uniquement des valeurs nulles.

On propose de plus un équipement source tel que précédemment décrit, l'équipement source étant un boîtier décodeur.

On propose de plus un système comprenant un équipement accessoire tel que précédemment décrit, et un équipement source tel que précédemment décrit.

On propose de plus un procédé de restitution audio, mis en œuvre dans l'unité de traitement de l'équipement source tel que précédemment décrit, et comprenant les étapes de :
∘ acquérir un signal audio-vidéo numérique comprenant un signal vidéo et un signal audio multicanal ;
∘ appliquer au moins un premier délai spécifique à au moins un premier canal audio et au moins un deuxième délai spécifique à au moins un deuxième canal audio du signal audio multicanal ;
∘ transmettre le signal vidéo et le au moins un premier canal audio à l'équipement accessoire via le port de sortie et la première liaison filaire, pour que l'équipement accessoire retransmette le signal vidéo à l'équipement de restitution audio-vidéo via une deuxième liaison filaire et le au moins un premier canal audio à au moins un équipement de restitution audio via une liaison sans fil ;
∘ transmettre le au moins un deuxième canal audio à l'équipement accessoire via le port de sortie et la première liaison filaire pour sa restitution par l'équipement de restitution audio-vidéo, ou bien à un dispositif de restitution audio interne intégré dans l'équipement source pour sa restitution par ledit dispositif de restitution audio ;
le ou les premiers délais spécifiques et le ou les deuxièmes délais spécifiques étant définis en fonction de capacités de restitution audio du au moins un équipement de restitution audio, de l'équipement de restitution audio-vidéo ou du dispositif de restitution audio interne, et/ou en fonction de caractéristiques de la deuxième liaison filaire et de la liaison sans fil.

On propose de plus un programme d'ordinateur comprenant des instructions qui conduisent l'unité de traitement de l'équipement source tel que précédemment décrit à exécuter les étapes du procédé de restitution audio tel que précédemment décrit.
On propose de plus un support d'enregistrement lisible par ordinateur, sur lequel est enregistré le programme d'ordinateur tel que précédemment décrit. L'invention sera mieux comprise à la lumière de la description qui suit de modes de mise en œuvre particuliers non limitatifs de l'invention.

### BREVE DESCRIPTION DES DESSINS

Il sera fait référence aux dessins annexés parmi lesquels :
[Fig. 1] la figure 1 représente un système multimédia de l'art antérieur ;
[Fig. 2] la figure 2 représente un système multimédia selon un premier mode de réalisation ;
[Fig. 3] la figure 3 représente le boîtier décodeur selon un premier mode de réalisation ;
[Fig. 4] la figure 4 représente l'équipement accessoire ;
[Fig. 5] la figure 5 illustre le fonctionnement du système audio ;
[Fig. 6] la figure 6 représente des étapes du procédé de restitution audio mis en œuvre dans le boîtier décodeur ;
[Fig. 7] la figure 7 représente un système multimédia selon un deuxième mode de réalisation ;
[Fig. 8] la figure 8 représente le boîtier décodeur selon un deuxième mode de réalisation.

### DESCRIPTION DETAILLEE

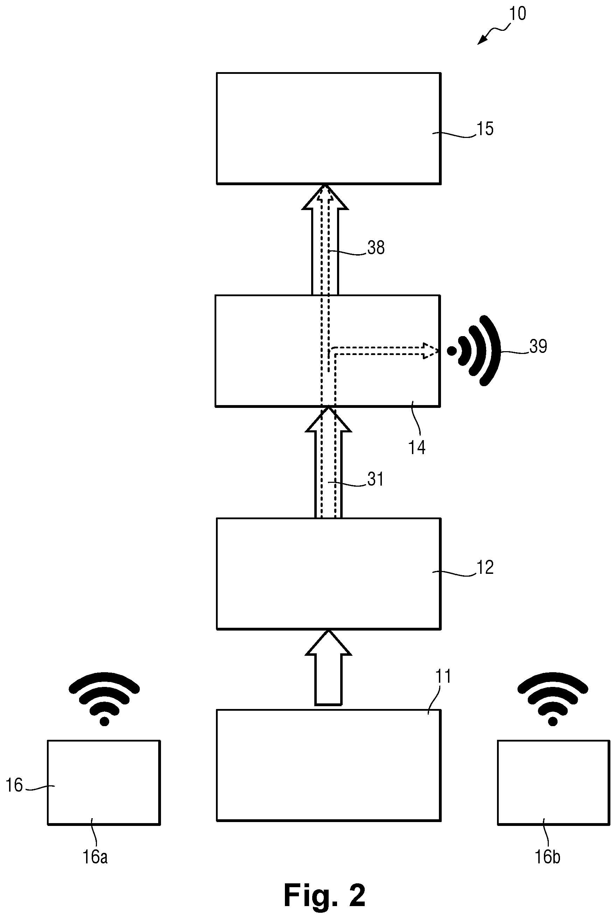

En référence à la figure 2, le système multimédia domestique 10 selon un premier mode de réalisation comporte ici une pluralité d'équipements comprenant une passerelle domestique 11, un boîtier décodeur 12 selon un premier mode de réalisation, un équipement accessoire 14, un téléviseur 15 et deux enceintes satellites 16.

Le boîtier décodeur 12 ne comprend pas de dispositif de restitution audio, et donc n'intègre pas de haut-parleur.

Ici, chaque enceinte satellite 16 est une enceinte double-canal comprenant deux haut-parleurs. Les enceintes 16 sont des enceintes connectées sans fil (ici Wi-Fi). L'enceinte 16a est positionnée derrière l'utilisateur à gauche de celui-ci, et l'enceinte 16b est positionnée derrière l'utilisateur à droite de celui-ci.

Les dispositifs de restitution audio qui restituent les signaux audio sont donc intégrés ici dans le téléviseur 15 et dans les enceintes 16. Par « dispositif de restitution audio », on entend au moins un haut-parleur et des composants électroniques reliés au haut-parleur, qui mettent en forme un signal audio numérique pour qu'il puisse être joué par le haut-parleur (les composants électroniques comprennent notamment un amplificateur audio).

Il s'agit de dispositifs « hétérogènes », c'est-à-dire qu'ils présentent des capacités de restitution audio différentes (leur réponse fréquentielle peut par exemple être différente).

Le système audio, c'est-à-dire l'ensemble des dispositifs de restitution audio du système multimédia, est configuré dans le mode de configuration audio « 5.1.2 », et peut donc restituer jusqu'à huit canaux audio.

On décrit tout d'abord structurellement le boîtier décodeur 12, puis l'équipement accessoire 14.

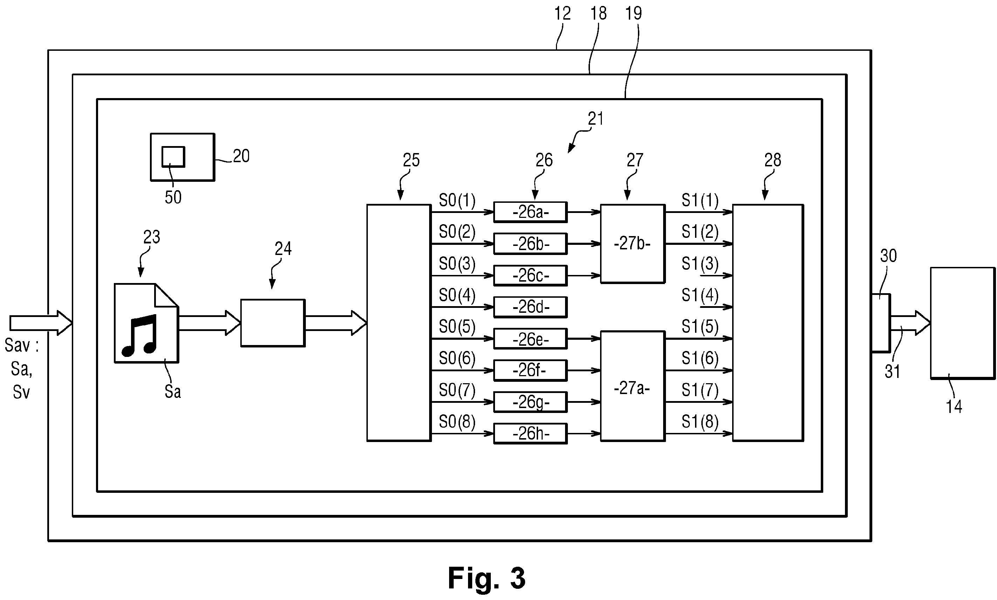

En référence à la figure 3, le boîtier décodeur 12 comprend une unité de traitement 18.

L'unité de traitement 18 est une unité électronique et logicielle. L'unité de traitement 18 comprend au moins un composant de traitement 19, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*)*.*

L'unité de traitement 18 comprend aussi une ou des mémoires 20, reliées à ou intégrées dans le ou les composants de traitement 19. Au moins l'une de ces mémoires 20 forme un support d'enregistrement lisible par ordinateur, sur lequel est enregistré au moins un programme d'ordinateur comprenant des instructions qui conduisent l'unité de traitement 18 à exécuter au moins certaines des étapes du procédé de restitution audio qui va être décrit.

L'unité de traitement 18 intègre une chaîne de traitement audio 21, mise en œuvre dans le ou les composants de traitement 19, et comprenant un certain nombre de modules de traitement. Ces modules de traitement comprennent :
- Un module de réception 23 ;
- Un module de décodage audio 24 ;
- Un module de mélange 25 ;
- Un module de temporisation 26 ;
- Un module de post-traitement 27 ;
- Un module de sortie 28.

L'unité de traitement 18 acquiert un signal audio-vidéo numérique Sav. Le signal audio-vidéo numérique Sav est par exemple un flux entrant externe provenant d'une source externe : réseau local, satellite, câble, DVB-T (pour *Digital Video Broadcasting-Terrestrial*), xDSL (qui peut s'interpréter par « ligne d'accès numérique »), etc. Le signal audio-vidéo Sav est par exemple transmis au boîtier décodeur 12 par la passerelle 11. Le signal audio-vidéo Sav peut aussi être un flux entrant interne provenant d'une source interne au boîtier décodeur 12, par exemple d'un disque dur de type HDD (pour *Hard Disk Drive*).

Le signal audio-vidéo Sav comprend un signal vidéo Sv et un signal audio multicanal Sa.

Le signal audio-vidéo Sav est encodé selon un format donné (par exemple *Dolby Digital*).

Le module de réception 23 reçoit le signal Sa.

Le module de décodage audio 24 est configuré pour décoder le signal audio multicanal Sa de manière à produire des canaux audio dans un format prédéterminé, qui est ici le format PCM (pour *Pulse-Code Modulation*).

Le module de mélange 25 est configuré pour mélanger des canaux : « *up-mixing* » pour augmenter le nombre de canaux ou « *down-mixing* » pour réduire le nombre de canaux en fonction de la configuration du système audio. Le module de mélange 25 produit jusqu'à huit canaux audio S0(1)...S0(8).

Le module de temporisation 26 comprend huit sous-modules 26a...26h. Chaque sous-module est configuré pour appliquer un délai spécifique à chaque canal audio S0(1)...S0(8). Le module de temporisation 26 produit donc une temporisation différentiée par canal audio.

L'application de ces délais spécifiques permet d'obtenir une synchronisation optimale lors de la restitution sonore par les haut-parleurs du téléviseur 15 et des enceintes 16, afin de conserver la même synchronisation qu'en sortie du décodeur audio 24.

Le module de post-traitement 27 est configuré pour appliquer un traitement audio spécifique pour chaque type de dispositif de restitution audio. Ici, le module de post-traitement 27 comprend un premier sous-module 27a qui met en œuvre un premier traitement audio propre aux enceintes satellites sans fil 16 et un deuxième sous-module 27b qui met en œuvre un deuxième traitement audio propre au téléviseur 15.

Le module de sortie 28 reçoit les canaux audio S1(1)...S1(8) au format PCM en sortie de la chaîne de traitement audio 21.

Les canaux audio S1(1)...S1(8) sont appliqués en entrée du module de sortie 28 pour être émis vers les dispositifs de restitution audio.

Le boîtier décodeur 12 comprend de plus un port de sortie 30, qui est en l'occurrence un port HDMI.

Le port de sortie 30 est ici connecté à l'équipement accessoire 14 via une première liaison filaire 31. Cette première liaison filaire 31 est une liaison HDMI.

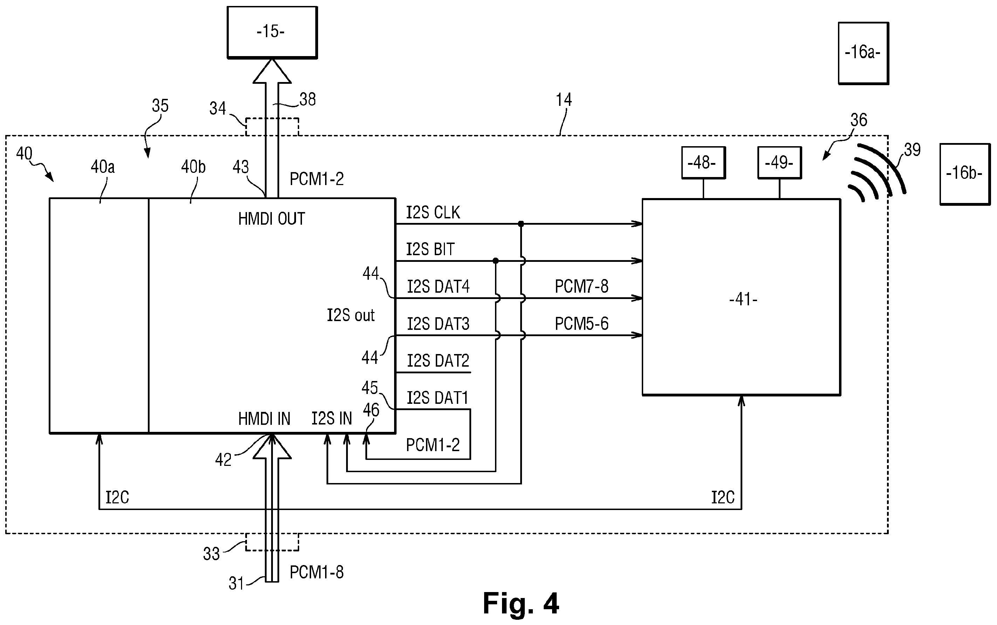

En référence à la figure 4, l'équipement accessoire 14, que l'on pourrait appeler « *dongle* », comprend quant à lui un port d'entrée 33, un port de sortie 34, un circuit de routage 35 et un circuit de communication sans fil 36.

Le port d'entrée 33 de l'équipement accessoire 14 est donc connecté au port de sortie 30 du boîtier décodeur 12 via la première liaison filaire 31.

Le port de sortie 34 de l'équipement accessoire 14 est connecté au téléviseur 15 via une deuxième liaison filaire 38, qui est aussi une liaison HDMI.

Le circuit de routage 35 comprend un composant de routage 40, qui est ici un module HDMI. Il s'agit par exemple du composant *Explore Tech EP91AXE.* Le circuit de communication sans fil 36 met en œuvre une liaison sans fil 39 (ici en Wi-Fi) et comprend un composant de communication sans fil 41, qui est ici un module Wi-Fi et par exemple le composant *ESP32* avec le *Firmware WiSA-DS.*

De manière générale, le composant de communication sans fil 41 pourra être adapté à communiquer selon d'autres normes de communication sans fil, telles que Bluetooth, dès lors que les enceintes 116 sont compatibles avec ces mêmes autres normes.

Le composant de routage 40 comprend un module de contrôle 40a et un module de traitement 40b.

Le module de traitement 40b du composant de routage 40 comprend une entrée principale 42, connectée au port d'entrée 33 de l'équipement accessoire 14, par laquelle le signal vidéo Sv et les canaux audio S1(1)...S1(8) (donc PCM1-8) entrent dans le composant de routage 40, et une sortie principale 43 connectée au port de sortie 34 de l'équipement accessoire 14.

Le module de traitement 40b du composant de routage 40 comprend au moins une première sortie 44 connectée au circuit de communication sans fil 36, et une deuxième sortie 45 et une entrée 46.

Ici, le module de traitement 40b du composant de routage 40 comporte deux premières sorties 44 : il s'agit des sorties I2S DAT3 et I2S DAT4 du composant 40.

La deuxième sortie 45 est la sortie I2S DAT1.

L'entrée 46 est une entrée I2S in.

Les premières sorties 44, la deuxième sortie 45 et l'entrée 46 sont donc ici au format I2S (pour *Integrated Interchip Sound*).

La deuxième sortie 45 est rebouclée sur l'entrée 46 à l'extérieur du composant de routage 40, de manière matérielle (*hardware*), c'est-à-dire par une piste conductrice ou tout autre élément conducteur.

Dans le présent mode de réalisation, le rebouclage est réalisé par l'extérieur du composant de routage 40. Toutefois, dans d'autres modes de réalisation (non illustrés), la deuxième sortie 45 pourra être rebouclée sur l'entrée 46 à l'intérieur du composant de routage 40.

On note que le module de traitement 40b du composant de routage 40 comprend aussi une autre sortie au format I2S, non utilisée : I2S DAT2. Le composant de routage 40 comprend aussi une sortie I2S CLK et une sortie I2S BIT, qui rebouclent sur des entrées distinctes I2S in, et qui sont de plus connectées au composant de communication 41.

Le module de traitement 40b comprend de plus une entrée de type I2C.

Le composant de communication 41 comprend aussi une entrée de type I2C.

Le port d'entrée 33 de l'équipement accessoire 14 est connecté à ces deux entrées I2C (ainsi qu'à l'entrée principale 42) du composant de routage 40.

L'équipement accessoire comprend de plus un bouton d'appairage 48 et un voyant lumineux 49, par exemple une diode électroluminescente 49 (LED). Le composant de communication 41 comprend une entrée connectée au bouton 48 et une sortie connectée au voyant lumineux 49.

Le bouton d'appairage 48 permet à l'utilisateur d'associer l'équipement accessoire 14 aux enceintes satellites 16. Le voyant lumineux 49 permet d'indiquer le statut de la transmission sans fil entre l'équipement accessoire 14 et les enceintes satellites 16. Le bouton d'appairage 48 et le voyant lumineux 49 sont optionnels.

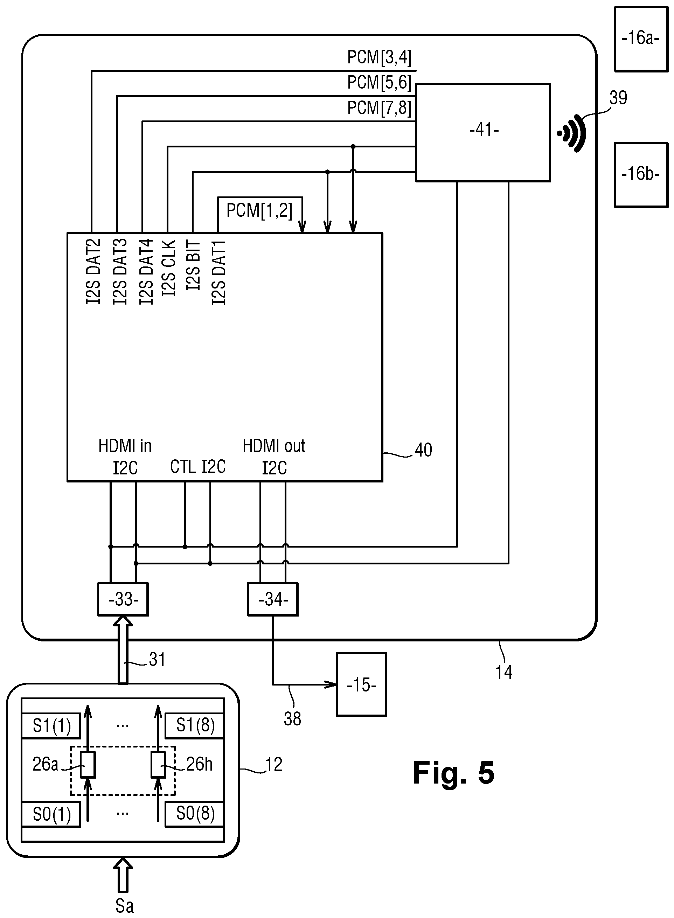

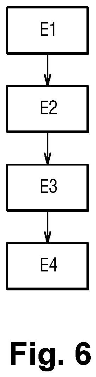

On explique maintenant, en référence aussi aux figures 5 et 6, la manière dont coopèrent le boîtier décodeur 12 et l'équipement accessoire 14 pour restituer un signal audio vidéo numérique Sav.

Le signal audio vidéo numérique Sav est donc acquis par l'unité de traitement 18 du boîtier décodeur 12 (étape E1). Le signal audio est par exemple un signal au format 5.1.2.

Le module de décodage audio 24 et le module de mélange 25 produisent ici sept canaux audio uniquement : S0(1), S0(2), S0(3), S0(5), S0(6), S0(7) et S0(8).

Les canaux S0(5), S0(6), S0(7) et S0(8) sont des premiers canaux destinés à être joués par au moins un, en l'occurrence deux équipements de restitution audio : les deux enceintes 16 (arrière).

Chaque enceinte 16 utilise donc ses deux haut-parleurs pour restituer deux canaux audio. Ici, par exemple, l'enceinte 16a restitue le canal horizontal arrière-gauche et le canal d'élévation gauche, alors que l'enceinte 16b restitue le canal horizontal arrière-droit et le canal d'élévation droit.

Les canaux S0(1), S0(2), S0(3) sont des deuxièmes canaux, destinés à être joués par un équipement de restitution audio-vidéo, et donc ici par les haut-parleurs du téléviseur 15.

Ces canaux audio sont au format PCM.

Chaque module de temporisation 26a...26h applique un délai spécifique au canal audio qu'il reçoit : les modules de temporisation 26e...26h appliquent des premiers délais spécifiques aux premiers canaux audio S0(5)...S0(8), et les modules de temporisation 26a...26c appliquent des deuxièmes délais spécifiques aux deuxièmes canaux audio S0(1)...S0(3) : étape E2.

Les premiers délais spécifiques et les deuxièmes délais spécifiques sont définis en fonction de capacités de restitution audio du au moins un équipement de restitution audio (ici des enceintes 16), de l'équipement de restitution audio-vidéo (ici du téléviseur 15) ou du dispositif de restitution audio interne du boîtier décodeur 12 (qui n'en comporte pas dans ce mode de réalisation), et/ou en fonction de caractéristiques de la deuxième liaison filaire 38 et de la liaison sans fil 39.

Les premiers délais spécifiques et les deuxièmes délais spécifiques tiennent compte de l'« hétérogénéité » des équipements de restitution audio-vidéo et audio quant à leurs capacités de restitution audio. Les premiers délais spécifiques et les deuxièmes délais spécifiques sont donc définis en fonction de ces capacités de restitution audio, mais aussi possiblement en fonction des caractéristiques des liaisons reliant l'équipement accessoire 14 et les équipements de restitution audio (liaison filaire 38 de type HDMI d'une part, et liaison sans fil 39 en Wi-Fi d'autre part).

Les premiers délais spécifiques et les deuxièmes délais spécifiques permettent donc de synchroniser la restitution des premiers canaux audio et des deuxièmes canaux audio malgré les différences internes et les différences de moyens de communication entre le téléviseur 15 et les enceintes 16.

On peut avoir un même premier délai spécifique pour tous les premiers canaux audio, ou bien des premiers délais spécifiques différents selon les premiers canaux audio. De même, on peut avoir un même deuxième délai spécifique pour tous les deuxièmes canaux audio, ou bien des deuxièmes délais spécifiques différents selon les deuxièmes canaux audio.

Les premiers canaux audio S0(5), S0(6), S0(7) et S0(8) sont alors appliqués en entrée du premier sous-module de post-traitement 27a qui met en œuvre des premiers traitements spécifiques pour les premiers canaux audio. On peut avoir un même premier traitement pour tous les premiers canaux audio, ou bien des premiers traitements différents selon les premiers canaux audio.

Les deuxièmes canaux audio S0(1), S0(2), S0(3) sont quant à eux appliqués en entrée du deuxième sous-module de post-traitement 27b qui met en œuvre des deuxièmes traitements spécifiques pour les deuxièmes canaux audio. On peut avoir un même deuxième traitement pour tous les deuxièmes canaux audio, ou bien des deuxièmes traitements différents selon les deuxièmes canaux audio.

Les premiers traitements spécifiques et les deuxièmes traitements spécifiques sont définis en fonction des capacités de restitution audio du au moins un équipement de restitution audio 16, de l'équipement de restitution audio-vidéo 15 ou du dispositif de restitution audio interne du boîtier décodeur 12 (qui n'en comporte pas dans ce mode de réalisation), et/ou en fonction d'une configuration audio du au moins un équipement de restitution audio. Par « configuration audio », on entend une configuration spatiale des dispositifs de restitution audio des équipements concernés.

Les premiers traitements spécifiques sont propres aux enceintes satellites 16, et ces traitements sont donc réalisés en fonction des caractéristiques physiques des haut-parleurs desdites enceintes 16 (par exemple en fonction de leur réponse fréquentielle). Ces traitements consistent ici à égaliser des canaux selon le type d'enceinte et les caractéristiques des haut-parleurs intégrés, par exemple en appliquant des filtres pour extraire les « medium » ou les « aigus ».

Optionnellement, ces traitements peuvent inclure une séparation fréquentielle d'un canal en plusieurs voies dans des domaines fréquentiels distincts, dans le cas où les enceintes satellites 16 contiennent plusieurs haut-parleurs pour le même canal audio.

Les deuxièmes traitements spécifiques sont propres au téléviseur 15, pour restituer le canal audio de la voie centrale vers les deux voies avant gauche et droite. Le post traitement 27b comprend donc ici un « *down-mixing »,* destiné aux haut-parleurs internes du téléviseur 15, consistant à mélanger trois canaux reçus (ici canaux avant-gauche, avant-droit et centre) de manière à obtenir deux canaux (S1(1, S1(2)) qui sont interprétés par le téléviseur 15 comme un signal audio stéréo (canal gauche et canal droit). En particulier, les deuxièmes traitements répartissent le canal audio de la voie centrale vers les deux voies avant gauche et droite.

Les différents canaux initialement contenus dans le signal audio multicanal entrant Sa ont donc été extraits et traités en tenant compte de la nature des dispositifs de restitution audio, avant d'être envoyés spécifiquement vers une destination de restitution. Autrement dit, chaque canal audio a reçu un traitement et un délai spécifique selon les haut-parleurs de destination. De ce routage différentié résulte l'application d'un délai spécifique à chaque dispositif de restitution audio de manière à obtenir une synchronisation optimale des canaux audio pour assurer une bonne restitution du son.

On note que les premiers traitements et les deuxièmes traitements peuvent inclure une atténuation des canaux de manière à obtenir un niveau sonore homogène avec les autres haut-parleurs du système.

Le module de post-traitement 27 du boîtier décodeur 12 fournit donc au module de sortie 28 un signal audio dont les composantes S1(1) à S1(8) peuvent être envoyées vers plusieurs sorties physiques (ici HDMI, Wi-Fi). Ici, comme on l'a vu, les composantes S1(1) et S1(2) correspondant respectivement aux canaux PCM 1 et 2 sont dirigées vers l'équipement accessoire 14 à destination du téléviseur 15, tandis que les composantes S1(5), S1(6), S1(7), S1(8), correspondant respectivement aux canaux PCM 5 à 8, sont dirigées vers l'équipement accessoire 14 qui effectue une transmission sans fil à destination des enceintes satellites 16.

L'équipement accessoire 14, branché entre le téléviseur 15 et le boîtier décodeur 12, joue le rôle d'un module d'extraction/diffusion audio.

L'équipement accessoire 14 est configuré pour intercepter tous les flux de données audio/vidéo transitant entre le boîtier décodeur 12 et le téléviseur 15 (flux HDMI) puis router et transmettre les premiers canaux audio S1(5) à S1(8) aux enceintes satellites 16 et les deuxième canaux audio S1(1) et S1(2) au téléviseur 15, les premiers canaux audio et les deuxièmes canaux audio comprenant des canaux différents adaptés respectivement à des dispositifs de restitution audio donnés. Pour la vidéo, l'intégralité du signal vidéo Sv est retransmis au téléviseur 15 (via un flux HDMI) .

Ainsi, l'unité de traitement 18 du boîtier décodeur 12 transmet le signal vidéo Sv et le au moins un premier canal audio à l'équipement accessoire 14 via le port de sortie 30 et la première liaison filaire 31, pour que l'équipement accessoire 14 retransmette le signal vidéo à l'équipement de restitution audio-vidéo 15 via la deuxième liaison filaire 38 et le au moins un premier canal audio à au moins un équipement de restitution audio 16 via la liaison sans fil 39 : étape E3.

L'unité de traitement 18 transmet le au moins un deuxième canal audio à l'équipement accessoire 14 via le port de sortie 30 et la première liaison filaire 31 pour sa restitution par l'équipement de restitution audio-vidéo : étape E4. Le circuit de routage 35 transmet donc au circuit de communication sans fil 36 uniquement les premiers canaux audio pour que le circuit de communication sans fil 36 les transmette aux enceintes 16 via la liaison sans fil 39. Le circuit de routage 35 transmet au port de sortie 34 uniquement le signal vidéo et les deuxièmes canaux audio, pour leur transmission au téléviseur 15.

Un routage interne est mis en œuvre dans le composant de routage 40 de l'équipement accessoire 14.

Le routage interne est tel que :
- le signal vidéo Sv chemine dans le composant de routage 40 depuis l'entrée principale 42 de celui-ci vers sa sortie principale 43 ;
- les premiers canaux audio S1(5)...S1(8) cheminent dans le composant de routage 40 depuis l'entrée principale 42 vers les premières sorties 44 ;
- les deuxièmes canaux audio S1(1), S1(2) cheminent dans le composant de routage 40 depuis l'entrée principale 42 vers la deuxième sortie 45, puis cheminent depuis l'entrée 46 vers la sortie principale 43. La deuxième sortie 45 est en effet, comme on l'a vu, rebouclée sur l'entrée 46 par l'extérieur du composant de routage 40.

La transmission des signaux audio entre le composant de routage 40 et le composant de communication sans fil 41 s'effectue donc via plusieurs bus série I2S fonctionnant par exemple sur 16 bits à 48 kHz, pilotés par le composant de routage 40. Chaque bus de données I2S est capable de transporter deux canaux audio. Ainsi, les quatre bus I2S (DAT1, DAT2, DAT3, DAT4) en sortie du composant de routage 40 peuvent transmettre l'ensemble des huit canaux PCM audio reçus sur son port HDMI d'entrée (HDMI in).

Le composant de communication sans fil 41 transmet les premiers canaux audio PCM 5-6 (donc S1(5) et S1(6)) à l'enceinte 16a, et les premiers canaux audio PCM 7-8 (donc S1(7) et S1(8)) à l'enceinte 16b.

Le composant de communication sans fil 41 reçoit des enceintes 16, via la liaison sans fil 39, une information lui indiquant le ou les premiers canaux audio à lui transmettre. Ici, les enceintes 16 communiquent donc avec l'équipement accessoire 14 pour lui indiquer les canaux attendus (en fonction de leur position par exemple, ou bien de leurs caractéristiques audio propres). La configuration des enceintes 16 est par exemple réalisée, pour chaque enceinte 16, par une ou des résistances connectées à une ou des entrées GPIO d'un composant de traitement (microcontrôleur par exemple) de l'enceinte 16.

Le composant de routage 40 transmet directement au téléviseur 15 le signal vidéo Sv. Le composant de routage 40 fonctionne en mode « *passthrough* », c'est-à-dire qu'il transmet les images sans les modifier, dans la limite des formats et du débit maximal supportés par le téléviseur 15 et l'équipement accessoire 14 (par exemple : limitation du débit si le HDMI 2.0 n'est pas supporté).

L'équipement accessoire 14 contribue donc à effectuer un « routage différentié » des canaux audio, dans la mesure où seuls les canaux audio PCM 1, PCM 2 sont envoyés au téléviseur 15, tandis que les autres canaux PCM 5 à 8 sont envoyés aux enceintes satellites 16. Dans l'exemple de la figure 4, la sortie I2S DAT2 n'a pas été utilisée mais pourrait l'être, par exemple pour transmettre deux canaux PCM supplémentaires vers une enceinte additionnelle.

On constate donc que la répartition des canaux audio est effectuée de manière matérielle.

Cette répartition est réalisée au niveau des enceintes 16 (ici via les résistances connectées aux entrées GPIO) permettant d'indiquer à l'équipement accessoire 14 les canaux attendus.

Cette répartition est aussi réalisée dans l'équipement accessoire 14. Cette répartition est matérialisée par un câblage électrique « en dur » dans l'équipement accessoire 14. Ici, ce câblage fait en sorte que les huit canaux PCM en sortie HDMI du boîtier décodeur 12 (les canaux PCM 1 à 8 fournis sur le port d'entrée HDMI in) sont répartis de la manière suivante :
- Canaux PCM 1, 2 : vers l'HDMI stéréo TV (PCM 2.0) ;
- Canaux PCM 3, 4 : non utilisés dans le présent exemple ;
- Canaux PCM 5, 6, 7, 8 : vers les enceintes satellites Wi-Fi.

Plus précisément, le « routage interne » des bus I2S de données réalisé en dur dans l'équipement accessoire 14 est le suivant :
- DAT1 correspond aux canaux PCM 1 et 2 du port HDMI d'entrée (HDMI in). Comme on l'a vu, DAT 1 est rebouclé sur lui-même, donc sur le port d'entrée I2S in, de manière à être transmis vers le téléviseur 15 sous forme PCM 2.0. Ce rebouclage constitue sur le plan matériel une particularité très astucieuse ;
- DAT2 correspond aux canaux PCM 3 et 4 du port HDMI d'entrée (HDMI in), ces deux canaux n'étant pas utilisés dans le présent mode de réalisation ;
- DAT3 correspond aux canaux PCM 5 et 6 du port HDMI d'entrée (HDMI in), ces deux canaux étant envoyés au circuit de communication sans fil 36 ; et
- DAT4 correspond aux canaux PCM 7 et 8 du port HDMI d'entrée (HDMI in), ces deux canaux étant envoyés au circuit de communication sans fil 36.

Ainsi, l'équipement accessoire 14 dispose avantageusement d'une même et unique configuration matérielle lui permettant d'effectuer les tâches suivantes, en fonction du cas de figure considéré (restitution de certains canaux audio sur le téléviseur 15 et/ou d'autres canaux sur les enceintes 16) :
- routage du canal vidéo vers le téléviseur 15 ;
- routage de certains canaux audio (les deuxièmes canaux audio) vers le téléviseur 15 ;
- routage d'autres canaux audio (les premiers canaux audio) vers les enceintes satellites 16 ;
- émission/réception Wi-Fi pour communiquer avec les enceintes satellites 16.

L'équipement accessoire 14 n'a pas besoin de connaître l'affectation des canaux audio qu'il transporte, il effectue uniquement du routage audio, ce qui lui permet de supporter de manière transparente les différentes configurations du système (en particulier les enceintes arrières avec élévation ou avec haut-parleurs médium et aigu).

De préférence, l'équipement accessoire 14 a connaissance des formats ou codecs audio et vidéo supportés par le téléviseur 15. Il reçoit par exemple pour cela l'EDID (*Extended Display Identification Data*) du téléviseur 15. L'équipement accessoire 14 acquiert tout ou une partie des codecs vidéo du téléviseur 15 auquel il est branché. En tant que répéteur HDMI, l'équipement accessoire 14 sélectionne selon l'EDID les codecs vidéo adaptés en fonction du téléviseur 15. L'équipement accessoire 14 ignore, pour la partie audio, les codecs audio du téléviseur 15 et signale le support unique de type « PCM à 8 canaux audio » par son propre EDID. Ainsi le boitier décodeur 12 reçoit par répétition dans les informations EDID de l'accessoire 14 les codecs vidéo supportés par le téléviseur 15 et par remplacement l'unique codec audio de type « PCM à 8 canaux audio ».

Avantageusement, la configuration du système audio est dynamique dans la mesure où l'utilisateur peut sélectionner une configuration audio parmi un ensemble de configurations, qui sont par exemple enregistrées dans le boîtier décodeur 12. A cet effet, un fichier de configurations est enregistré, de préférence dans l'une des mémoires 20 de l'unité de traitement 18 du boîtier décodeur 12. Ce fichier comprend une table de correspondance 50 entre les canaux en entrée (c'est-à-dire compris dans le signal audio multicanal Sa) et les canaux en sortie. Cette table de correspondance 50 correspond à des modes de configuration prédéfinis par rapport au matériel déployé chez l'utilisateur (par exemple le boîtier décodeur 12, le nombre et le types d'enceintes externes 16, le nombre de haut-parleurs par enceinte 16 et la réponse fréquentielle des haut-parleurs, etc.). Par exemple, l'utilisateur peut sélectionner le type d'enceinte en indiquant le nombre de canaux par enceinte. A chaque configuration sont associés des traitements spécifiques qui sont également indiqués dans le fichier de configuration. En fonction du choix de l'utilisateur, le boîtier décodeur 12 sélectionne dynamiquement les canaux de sortie audio ainsi que le(s) traitement(s) à appliquer sur la base des informations contenues dans le fichier.

On voit que l'équipement accessoire 14 est donc particulièrement avantageux pour effectuer un routage différentié des canaux audio à partir d'un boîtier décodeur 12 déjà déployé et ne disposant pas de moyens de communication sans fil, quelle que soit la nature du boîtier décodeur 12 (avec ou sans dispositif de restitution audio), étant donné que l'équipement accessoire 14 peut être facilement ajouté à un système existant (qui comprendrait par exemple un boîtier décodeur, un téléviseur et des enceintes satellites).

La solution proposée permet une réduction de complexité dans la mesure où les dispositifs de restitution audio ne nécessitent pas de décodage. Par exemple, les enceintes satellites 16 du système audio ne doivent réaliser aucun traitement de signal audio (notamment décodage).

L'invention est particulièrement avantageuse dans le cas où des enceintes satellites sans capacité de traitement numérique sont ajoutées en complément des haut-parleurs d'un téléviseur et/ou d'une source numérique audio (boîtier décodeur avec ou sans haut-parleur) pour obtenir un rendu sonore optimum.

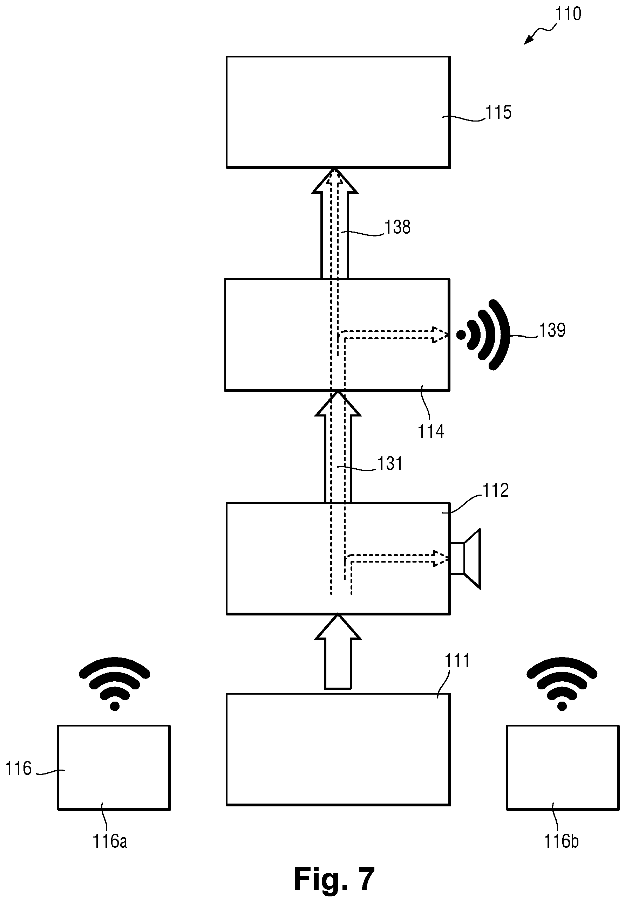

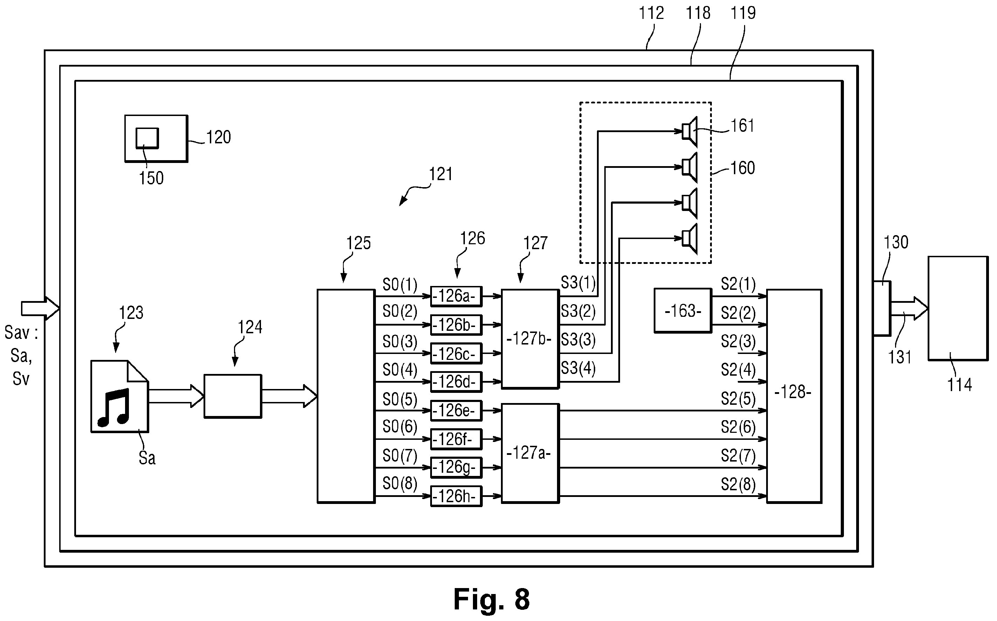

On s'intéresse maintenant à un boîtier décodeur 112 selon un deuxième mode de réalisation, en référence aux figures 7 et 8.

On ajoute sur les figures 7 et 8 « 100 » à toutes les références des éléments similaires déjà présents sur les figures 3 et 4.

Cette fois, le boîtier décodeur 112 intègre un dispositif de restitution audio interne 160, comprenant au moins un haut-parleur 161, en l'occurrence ici quatre haut-parleurs 161. Le boîtier décodeur 112 est ainsi capable de restituer quatre canaux audio : un canal avant-gauche, un canal central, un canal avant-droit et un canal de grave.

La chaîne de traitement audio 121 de l'unité de traitement 118 comprend :
- Un module de réception 123 ;
- Un module de décodage audio 124 ;
- Un module de mélange 125 ;
- Un module de temporisation 126 ;
- Un module de post-traitement 127 ;
- Un module de génération de silence 163 ;
- Un module de sortie 128.

Le générateur de silence 163 permettent de générer un signal audio non audible, dont toutes les valeurs sont nulles.

Cette fois, le module de décodage audio 124 et le module de mélange 125 produisent huit canaux audio : S0(1), S0(2), S0(3), S0(4), S0(5), S0(6), S0(7) et S0(8).

Les canaux S0(5), S0(6), S0(7) et S0(8) sont destinés à être joués par au moins un, en l'occurrence par deux équipements de restitution audio : les deux enceintes 116.

Les canaux S0(1), S0(2), S0(3), S0(4) sont destinés à être joués par le dispositif de restitution audio interne 160 du boîtier décodeur 112.

Les modules de temporisation 126e...126h appliquent des premiers délais spécifiques aux premiers canaux audio, et les modules de temporisation 126a...126d appliquent des deuxièmes délais spécifiques aux deuxièmes canaux audio.

Le premiers délais spécifiques et les deuxièmes délais spécifiques sont définis en fonction de capacités de restitution audio des enceintes 116 et du dispositif de restitution audio interne 160 du boîtier décodeur 112, et en fonction de caractéristiques de la deuxième liaison filaire (reliant l'équipement accessoire et le téléviseur) et de la liaison sans fil (reliant l'équipement accessoire 114 aux enceintes 116).

Les premiers délais spécifiques et les deuxièmes délais spécifiques tiennent donc compte de l'« hétérogénéité » des équipements de restitution audio-vidéo et audio quant à leurs capacités de restitution audio.

Les canaux audio S0(5), S0(6), S0(7) et S0(8) sont alors appliqués en entrée du premier sous-module de post-traitement 127a qui met en œuvre un premier traitement spécifique pour chaque premier canal audio.

Les canaux audio S0(1), S0(2), S0(3), S0(4) sont alors appliqués en entrée du deuxième sous-module de post-traitement 127b qui met en œuvre un deuxième traitement spécifique pour chaque deuxième canal audio.

Les premiers traitements spécifiques sont propres aux enceintes satellites sans fil 116, ces traitements étant réalisés en fonction des caractéristiques physiques des haut-parleurs desdites enceintes (par exemple en fonction de leur réponse fréquentielle). Ces traitements consistent ici à égaliser des canaux selon le type d'enceinte et les caractéristiques des haut-parleurs intégrés, par exemple en appliquant des filtres pour extraire les « medium » ou les « aigus ».

Optionnellement, ces traitements peuvent inclure une séparation fréquentielle d'un canal en plusieurs voies dans des domaines fréquentiels distincts, dans le cas où les enceintes satellites contiennent plusieurs haut-parleurs pour le même canal audio.

Le premier sous-module de post-traitement 127a produit donc les premiers canaux audio S2(5)...S2(8).

Les deuxièmes traitements spécifiques sont propres au dispositif de restitution audio interne 160 du boîtier décodeur 112. Ces traitements sont réalisés en fonction des caractéristiques physiques des haut-parleurs 161 du dispositif de restitution audio interne 160 du boîtier décodeur 112 (par exemple leur réponse fréquentielle).

Le deuxième sous-module de post-traitement 127b produit donc les deuxièmes canaux audio S3(1)...S3(4).

Les deuxièmes canaux audio sont transmis au dispositif de restitution audio interne 160 intégré dans le boîtier décodeur 112 pour leur restitution par ledit dispositif de restitution audio interne 160.

Les deuxièmes canaux audio S3(1)...S3(4) ne sont donc pas transmis à l'équipement accessoire 114 via la première liaison filaire 131.

L'unité de traitement 118 du boîtier décodeur 112 transmet cependant à l'équipement accessoire 114, via le port de sortie 130 et la première liaison filaire 131, au moins un deuxième canal audio virtuel comprenant uniquement des valeurs nulles. Les deuxièmes canaux audio virtuels S2(1) S2(2) sont produits par le module de génération de silence 163 puis appliqués en entrée du module de sortie 128 qui les transmet à l'équipement accessoire 114.

Les quatre canaux logiques S3(1) à S3(4) sont les sorties après post-traitement 127b des quatre canaux S0(1) à S0(4). Ainsi, à l'issue des étapes de pré-traitement par le module de mélange 125 et de post-traitement par le module de post-traitement 127b, les canaux correspondant aux quatre canaux audio S0(1) à S0(4) du flux audio multicanal incident sont « routés » respectivement vers les quatre haut-parleurs 161 du boîtier décodeur 112.

Les canaux S2(5), S2(6), S2(7) et S2(8), en sorties du module de post-traitement 127a, fournis au niveau du module de sortie 128, correspondent aux canaux S0(5), S0(6), S0(7) et S0(8) du signal fourni par le module de décodage audio 124. Sur cette sortie audio, un signal de silence est envoyé sur les canaux S2(1) et S2 (2). Les signaux audio S2(3) et S2(4) n'étant pas utilisés dans la suite du système, ils ne sont pas explicitement connectés à une source. Cette sortie audio est dirigée vers l'équipement accessoire 114.

L'équipement accessoire 114, quant à lui, reçoit donc le signal vidéo, les premiers canaux audio S2(5) à S2(8), et des deuxièmes canaux audio S2(1), S2(2), qui sont des canaux virtuels comprenant uniquement du silence.

Le circuit de routage transmet au circuit de communication sans fil uniquement le au moins un premier canal audio pour que le circuit de communication sans fil le transmette aux enceintes via la liaison sans fil 139. Le circuit de routage transmet au téléviseur 115 uniquement le signal vidéo et le au moins un deuxième canal audio.

A nouveau, le routage interne qui est mis en œuvre dans le composant de routage est donc tel que le signal vidéo chemine dans le composant de routage depuis l'entrée principale vers la sortie principale. Les premiers canaux audio cheminent dans le composant de routage depuis l'entrée principale vers les premières sorties pour être transmis par le composant de communications sans fil aux enceintes. Les deuxièmes canaux audio virtuels cheminent dans le composant de routage depuis l'entrée principale vers la deuxième sortie, puis cheminent depuis l'entrée vers la sortie principale. Le téléviseur 115 restitue donc un signal de silence, les deuxièmes canaux audio réels étant restitués par l'équipement décodeur 112.

Ainsi, pour l'équipement accessoire, le changement de nature des deuxièmes canaux (silence au lieu de véritables canaux audio) est totalement transparent.

Bien entendu, l'invention n'est pas limitée aux modes de réalisation décrits mais englobe toute variante entrant dans le champ de l'invention tel que défini par les revendications.

L'équipement source n'est pas nécessairement un boîtier décodeur (STB, enrichie ou non de moyens de restitution audio), il peut s'agir de n'importe quelle autre source audiovisuelle numérique destinée à transmettre des données audio numériques à partir d'un flux audio multicanal à un ensemble de dispositifs de restitution audio possiblement hétérogènes, cette source pouvant comprendre des moyens de restitution sonore. L'équipement source pourrait par exemple être un téléviseur ou un vidéoprojecteur.

Les composants de l'équipement accessoire peuvent être différents de ceux décrits ici. Le circuit de routage et le circuit de communication sans fil peuvent chacun comprendre plusieurs composants.

Les liaisons filaires ne sont pas nécessairement des liaisons HDMI. Un autre format filaire, adapté à transmettre un signal audio multicanal, peut être envisagé, et par exemple l'un des formats *USB-C, DisplayPort, Thunderbolt.*

L'invention a été décrite dans le cas où le système audio comprend une paire d'enceintes satellites sans fil pour une configuration audio « 5.1.2 ». Bien évidemment, l'invention s'applique également à d'autres configurations audio pouvant impliquer d'autres types de dispositifs de restitution audio, tels qu'une barre de son, un caisson de basses. En outre, on notera que le nombre d'enceintes ou de haut-parleurs n'est pas limitatif, qu'il s'agisse des haut-parleurs du téléviseur, du boîtier décodeur, des enceintes satellites, du caisson de basse, etc.

Les enceintes ne sont pas nécessairement des enceintes double canal.

De manière générale, une enceinte comprend un ou plusieurs haut-parleurs, chacun des haut-parleurs pouvant recevoir un canal audio différent (par exemple une enceinte comprenant quatre haut-parleurs peut restituer quatre canaux différents : avant-gauche, avant-droit, centre, grave).

On peut utiliser une enceinte monocanale comprenant un haut-parleur pour restituer un seul canal audio du système, par exemple un canal horizontal arrière-gauche ou arrière-droite.

Une enceinte physique disposant de deux haut-parleurs (par exemple une enceinte ATMOS avec un haut-parleur pointant vers le plafond, c'est-à-dire en « *up-firing* ») peut être configurée (via programmation de son amplificateur) pour utiliser un seul canal audio logique (par exemple le canal horizontal arrière-gauche ou canal horizontal arrière-droit) et le dupliquer sur les deux haut-parleurs (mode « *duplicate* »). Dans un autre mode de fonctionnement, cette enceinte peut recevoir deux canaux logiques correspondant au même canal audio source mais qui ont potentiellement reçu un traitement différent, et chaque canal audio logique peut être aiguillé par exemple vers un haut-parleur dédié à la restitution des médiums et un autre haut-parleur dédié à la restitution des aiguës.

Une enceinte physique intégrant deux haut-parleurs peut aussi être configurée pour recevoir deux canaux logiques et les transmettre sur chacun des deux haut-parleurs.

Le système audio a été décrit comme comprenant des enceintes arrières. Toutefois, des enceintes à l'avant (ou à toute autre position) peuvent être ajoutées en complément ou en remplacement d'autres haut-parleurs du système.

La position des enceintes décrite ici est statique (configuration matérielle), mais un autre mode de réalisation permettrait à l'utilisateur d'attribuer la position (arrière-gauche ou arrière-droit) des enceintes dynamiquement (par exemple via un menu de configuration depuis le boîtier décodeur).

Dans les chaînes audio illustrées sur les figures, les signaux S1, S2 et S3 ne respectent pas obligatoirement le même ordre des canaux composant le signal S0 en sortie du module de décodage audio.

Par exemple, dans le premier mode de réalisation, le canal 3 en sortie du module de décodage audio 24, noté S0(3), représentant la voie centrale du signal audio d'origine, est mélangé aux canaux S1(1) et S1(2) en sortie du boîtier décodeur. Selon le deuxième mode de réalisation, dans le cas où les haut-parleurs sont configurés pour restituer deux voies audio, le système (par l'intermédiaire du boîtier décodeur) peut être configuré pour extraire par séparation fréquentielle à partir d'un même canal S0(X) deux nouveaux signaux pouvant être transmis vers les voies S2(5) et S2(7) en sortie du boîtier décodeur.

Dans les modes de réalisations précédemment décrits, le module de temporisation 26, 126 et le module de post-traitement 27, 127 sont inclus dans le boîtier décodeur 12, 112 ou plus généralement dans l'équipement source. Dans d'autres modes de réalisation (non illustrés), tout ou partie des fonctionnalités mises en œuvre par le module de temporisation 26, 126 et/ou le module de post-traitement 27, 127 telles que décrites précédemment en référence aux figures 3, 8 pourront être déportées dans l'équipement accessoire 14, 114, à condition que le boîtier décodeur 12, 112 conserve bien le même nombre de canaux PCM sur son port de sortie 30, 130, ce nombre étant par exemple égal à 8 pour un mode de configuration audio 5.1.2. Les fonctionnalités déportées sont mises en œuvre au moyen d'une unité de traitement intégrée dans l'équipement accessoire.

Selon une particularité de l'invention, l'unité de traitement de l'équipement accessoire est configurée pour appliquer au moins un premier délai spécifique à au moins un premier canal audio et au moins un deuxième délai spécifique à au moins un deuxième canal audio. Le premier canal audio et le deuxième canal audio sont fournis par l'équipement source (e.g le boîtier décodeur 12, 112). Le ou les premiers délais spécifiques et le ou les deuxièmes délais spécifiques sont définis en fonction de capacités de restitution audio d'au moins un équipement de restitution audio 16, 116, de l'équipement de restitution audio-vidéo 15 ; 115 ou du dispositif de restitution audio interne 160, et/ou en fonction de caractéristiques de la deuxième liaison filaire 38, 138 et de la liaison sans fil 39,139.

Dans le cas où l'équipement source comprend le dispositif de restitution audio interne 160, l'équipement accessoire 114 est configuré en outre pour récupérer auprès du dispositif de restitution audio-vidéo 115, une première valeur de délai relative à ce dispositif et la communiquer à l'équipement source. Par exemple, cette valeur de délai fait partie des informations EDID du téléviseur 115.

En outre, l'équipement accessoire 114 peut être configuré pour obtenir une deuxième valeur de délai auprès des équipements de restitution audio 116. La deuxième valeur de délai peut aussi être une valeur fixe, de 40ms par exemple.

Dès lors que les première et deuxième valeurs de délai sont connues de l'unité de traitement de l'équipement accessoire, celle-ci peut être configurée pour déterminer un délai de référence maximum correspondant à la plus grande des valeurs sélectionnées parmi les première et deuxième valeurs de délai (e.g. sélection du délai le plus élevé parmi le délai dû au téléviseur et le délai dû aux enceintes).

De préférence, c'est cette valeur de délai de référence maximum qui est transmise par l'équipement accessoire 114 à l'équipement source 112.

Ceci permet à l'équipement source 112 de synchroniser la restitution audio du dispositif de restitution audio interne 160 avec celle réalisée par les équipements de restitution audio 116 et avec celle réalisée par le dispositif de restitution audio-vidéo 115.

Par exemple, à un instant t=0, on a sur la sortie 130 un signal audio-vidéo à t=0s (pas de délai), alors qu'on applique un délai au dispositif de restitution audio interne 160 (retard t=-40ms).

L'équipement accessoire 114 transmet un nouveau délai dans son EDID, qui est donc une combinaison de la première valeur de délai et de la deuxième valeur de délai évoquées plus tôt.

Selon une autre particularité de l'invention, l'unité de traitement de l'équipement accessoire est configurée en outre pour mettre en œuvre au moins un premier traitement spécifique pour chaque premier canal audio et au moins un deuxième traitement spécifique pour chaque deuxième canal audio. Le ou les premiers traitements spécifiques et le ou les deuxièmes traitements spécifiques sont définis en fonction des capacités de restitution audio d'au moins un équipement de restitution audio 16, 116, de l'équipement de restitution audio-vidéo 15, 115 ou du dispositif de restitution audio interne 160 de l'équipement source 112, et/ou en fonction d'une configuration audio du au moins un équipement de restitution audio.

## Revendications

1. Equipement accessoire (14 ; 114) comportant :
- un port d'entrée (33) agencé pour être connecté à un boîtier décodeur (12 ; 112) par une première liaison filaire (31 ; 131), et un port de sortie (34) agencé pour être connecté à un équipement de restitution audio-vidéo (15 ; 115) par une deuxième liaison filaire (38 ; 138) ;
- un circuit de communication sans fil (36) ;
- un circuit de routage (35) agencé pour :
.recevoir du boîtier décodeur, via le port d'entrée et la première liaison filaire, un signal audio-vidéo numérique comprenant un signal vidéo (Sv) et des canaux audio, les canaux audio comprenant au moins un premier canal audio (S1(5)...S1(8) ; S2(5)...S2(8)) appartenant à un signal audio multicanal, et au moins un deuxième canal audio (S1(1), S1(2) ; S2(1), S2(2)) ;
.transmettre au circuit de communication sans fil (36) uniquement le au moins un premier canal audio pour que le circuit de communication sans fil le transmette à au moins un équipement de restitution audio (16 ; 116) via une liaison sans fil (39 ; 139) ;
.transmettre à l'équipement de restitution audio-vidéo (15 ; 115) uniquement le signal vidéo (Sv) et le au moins un deuxième canal audio (S1(1), S1(2) ; S2(1), S2(2)).

2. Equipement accessoire selon la revendication 1, dans lequel le circuit de routage (35) comporte un composant de routage (40) comprenant :
- une entrée principale (42) connectée au port d'entrée de l'équipement accessoire, par laquelle le signal vidéo et les canaux audio entrent dans le composant de routage, et une sortie principale (43) connectée au port de sortie de l'équipement accessoire ;
- au moins une première sortie (44) connectée au circuit de communication sans fil (36), et une deuxième sortie (45) et une entrée (46), la deuxième sortie étant rebouclée sur l'entrée (46),
un routage interne étant mis en œuvre dans le composant de routage (40), de sorte que le signal vidéo chemine dans le composant de routage depuis l'entrée principale (42) vers la sortie principale (43), le au moins un premier canal audio chemine dans le composant de routage depuis l'entrée principale vers la au moins une première sortie, et le au moins un deuxième canal audio chemine dans le composant de routage depuis l'entrée principale vers la deuxième sortie, puis chemine depuis l'entrée (46) vers la sortie principale (43).

3. Equipement accessoire selon la revendication 2, dans lequel la deuxième sortie est rebouclée sur l'entrée (46) à l'extérieur du composant de routage.

4. Equipement accessoire selon l'une des revendications 2 ou 3, dans lequel la au moins une première sortie (44), la deuxième sortie (45) et l'entrée (46) sont de type I2S.

5. Equipement accessoire selon l'une des revendications précédentes, dans lequel le circuit de communication sans fil (36) est agencé pour recevoir du au moins un équipement de restitution audio (16 ; 116), via la liaison sans fil (39 ; 139), une information lui indiquant le ou les premiers canaux audio à lui transmettre.

6. Equipement accessoire selon l'une des revendications précédentes, dans lequel la première liaison filaire (31) et la deuxième liaison filaire (38) sont des liaisons HDMI, et dans lequel le circuit de communication sans fil (36) intègre un module Wi-Fi ou Bluetooth.

7. Equipement accessoire selon l'une des revendications précédentes, comprenant une unité de traitement configurée pour appliquer au moins un premier délai spécifique à au moins un dudit au moins un premier canal audio et au moins un deuxième délai spécifique à au moins un dudit au moins un deuxième canal audio du signal audio multicanal, le ou les premiers délais spécifiques et le ou les deuxièmes délais spécifiques étant définis en fonction de capacités de restitution audio du au moins un équipement de restitution audio (16 ; 116), de l'équipement de restitution audio-vidéo (15 ; 115) ou d'un dispositif de restitution audio interne (160) intégré dans le boîtier décodeur (112) pour sa restitution par ledit dispositif de restitution audio, et/ou en fonction de caractéristiques de la deuxième liaison filaire (38 ; 138) et de la liaison sans fil (39 ; 139).

8. Equipement accessoire selon la revendication précédente, dans lequel l'unité de traitement est en outre agencée pour mettre en œuvre au moins un premier traitement spécifique pour chaque premier canal audio et au moins un deuxième traitement spécifique pour chaque deuxième canal audio, le ou les premiers traitements spécifiques et le ou les deuxièmes traitements spécifiques étant définis en fonction des capacités de restitution audio du au moins un équipement de restitution audio (16 ; 116), de l'équipement de restitution audio-vidéo (15 ; 115) ou du dispositif de restitution audio interne (160) du boîtier décodeur (112), et/ou en fonction d'une configuration audio du au moins un équipement de restitution audio.

9. Boîtier décodeur (12 ; 112), comportant :
- un port de sortie (30 ; 130) agencé pour être connecté à un équipement accessoire (14 ; 114) via une première liaison filaire (31 ; 131) ;
- une unité de traitement (18 ; 118) agencée pour :
.acquérir un signal audio-vidéo numérique (Sav) comprenant un signal vidéo (Sv) et un signal audio multicanal (Sa) ;
.appliquer au moins un premier délai spécifique à au moins un premier canal audio et au moins un deuxième délai spécifique à au moins un deuxième canal audio du signal audio multicanal ;
.transmettre le signal vidéo et le au moins un premier canal audio à l'équipement accessoire (14 ; 114) via le port de sortie (30 ; 130) et la première liaison filaire (31 ; 131), pour que l'équipement accessoire retransmette le signal vidéo à l'équipement de restitution audio-vidéo via une deuxième liaison filaire (38 ; 138) et le au moins un premier canal audio à au moins un équipement de restitution audio (16 ; 116) via une liaison sans fil (39 ; 139) ;
.transmettre le au moins un deuxième canal audio à l'équipement accessoire via le port de sortie et la première liaison filaire pour sa restitution par l'équipement de restitution audio-vidéo, ou bien à un dispositif de restitution audio interne (160) intégré dans le boîtier décodeur pour sa restitution par ledit dispositif de restitution audio ;
le ou les premiers délais spécifiques et le ou les deuxièmes délais spécifiques étant définis en fonction de capacités de restitution audio du au moins un équipement de restitution audio (16 ; 116), de l'équipement de restitution audio-vidéo (15 ; 115) ou du dispositif de restitution audio interne (160), et/ou en fonction de caractéristiques de la deuxième liaison filaire (38 ; 138) et de la liaison sans fil (39 ; 139).

10. Boîtier décodeur selon la revendication 9, l'unité de traitement (18 ; 118) étant en outre agencée pour mettre en œuvre au moins un premier traitement spécifique pour chaque premier canal audio et au moins un deuxième traitement spécifique pour chaque deuxième canal audio,
le ou les premiers traitements spécifiques et le ou les deuxièmes traitements spécifiques étant définis en fonction des capacités de restitution audio du au moins un équipement de restitution audio (16 ; 116), de l'équipement de restitution audio-vidéo (15 ; 115) ou du dispositif de restitution audio interne (160) du boîtier décodeur (112), et/ou en fonction d'une configuration audio du au moins un équipement de restitution audio.

11. Boîtier décodeur selon l'une des revendications 9 ou 10, dans lequel le boîtier décodeur (12) n'intègre pas de dispositif de restitution audio, et dans lequel l'unité de traitement (18) est aussi agencée pour transmettre le au moins un deuxième canal audio (S1(1), S1(2)) à l'équipement accessoire (14) via le port de sortie et la première liaison filaire (31) pour sa restitution par l'équipement de restitution audio-vidéo (15).

12. Boîtier décodeur selon l'une des revendications 9 ou 10, dans lequel le boîtier décodeur (112) intègre un dispositif de restitution audio interne (160), l'unité de traitement (118) étant agencée pour transmettre le au moins un deuxième canal audio (S3(1)...S3(4)) au dispositif de restitution audio interne (160) pour sa restitution par ledit dispositif de restitution audio interne, l'unité de traitement (118) étant en outre agencée pour transmettre à l'équipement accessoire (114), via le port de sortie et la première liaison filaire, au moins un deuxième canal audio virtuel (S2(1), S2(2)) comprenant uniquement des valeurs nulles.

13. Système comprenant un équipement accessoire selon la revendication 1, et un boîtier décodeur selon la revendication 9.

14. Procédé de restitution audio, mis en œuvre dans l'unité de traitement (18 ; 118) du boîtier décodeur selon l'une des revendications 9 à 12, et comprenant les étapes de :
- acquérir un signal audio-vidéo numérique (Sav) comprenant un signal vidéo (Sv) et un signal audio multicanal (Sa) (E1) ;
- appliquer au moins un premier délai spécifique à au moins un premier canal audio et au moins un deuxième délai spécifique à au moins un deuxième canal audio du signal audio multicanal (E2) ;
- transmettre le signal vidéo et le au moins un premier canal audio à l'équipement accessoire (14 ; 114) via le port de sortie (30 ; 130) et la première liaison filaire (31 ; 131), pour que l'équipement accessoire retransmette le signal vidéo à l'équipement de restitution audio-vidéo via une deuxième liaison filaire (38 ; 138) et le au moins un premier canal audio à au moins un équipement de restitution audio (16 ; 116) via une liaison sans fil (39 ; 139) (E3) ;
- transmettre le au moins un deuxième canal audio à l'équipement accessoire via le port de sortie et la première liaison filaire pour sa restitution par l'équipement de restitution audio-vidéo (E4), ou bien à un dispositif de restitution audio interne (160) intégré dans le boîtier décodeur pour sa restitution par ledit dispositif de restitution audio ;
le ou les premiers délais spécifiques et le ou les deuxièmes délais spécifiques étant définis en fonction de capacités de restitution audio du au moins un équipement de restitution audio (16 ; 116), de l'équipement de restitution audio-vidéo (15 ; 115) ou du dispositif de restitution audio interne (160), et/ou en fonction de caractéristiques de la deuxième liaison filaire (38 ; 138) et de la liaison sans fil (39 ; 139).

15. Programme d'ordinateur comprenant des instructions de code de programme pour l'exécution des étapes du procédé de restitution audio selon la revendication 14 lorsque ledit programme est exécuté sur un ordinateur.

16. Support d'enregistrement lisible par ordinateur, sur lequel est enregistré le programme d'ordinateur selon la revendication 15.

## Patentansprüche

1. Zusatzgerät (14; 114) umfassend:
- einen Eingangsanschluss (33), der so ausgelegt ist, dass er über eine erste Kabelverbindung (31; 131) mit einem Decodergerät (12; 112) verbunden werden kann, und einen Ausgangsanschluss (34), der so ausgelegt ist, dass er über eine zweite Kabelverbindung (38; 138) mit einem Audio-Video-Wiedergabegerät (15; 115) verbunden werden kann;
- eine drahtlose Kommunikationsschaltung (36);
- eine Routing-Schaltung (35), die dazu ausgelegt ist:
.vom Decodergerät über den Eingangsanschluss und die erste Kabelverbindung ein digitales Audio-Video-Signal zu empfangen, das ein Videosignal (Sv) und Audiokanäle umfasst, wobei die Audiokanäle mindestens einen ersten Audiokanal (S1(5)...S1(8); S2(5)...S2(8)), der Teil eines Mehrkanal-Audiosignals ist, sowie mindestens einen zweiten Audiokanal (S1(1), S1(2); S2(1), S2(2)) umfassen;
.an die drahtlose Kommunikationsschaltung (36) nur den mindestens einen ersten Audiokanal zu übertragen, damit die drahtlose Kommunikationsschaltung diesen über eine drahtlose Verbindung (39; 139) an mindestens ein Audiowiedergabegerät (16; 116) weiterleitet;
.nur das Videosignal (Sv) und den mindestens einen zweiten Audiokanal (S1(1), S1(2); S2(1), S2(2)) an das Audio-Video-Wiedergabegerät (15; 115) zu übertragen.

2. Zusatzgerät nach Anspruch 1, wobei die Routing-Schaltung (35) eine Routing-Komponente (40) enthält, die umfasst:
- einen Haupteingang (42), der mit dem Eingangsanschluss des Zusatzgeräts verbunden ist, über den das Videosignal und die Audiokanäle in die Routing-Komponente gelangen, und einen Hauptausgang (43), der mit dem Ausgangsanschluss des Zusatzgeräts verbunden ist;
- mindestens einen ersten Ausgang (44), der mit der drahtlosen Kommunikationsschaltung (36) verbunden ist, und einen zweiten Ausgang (45) sowie einen Eingang (46), wobei der zweite Ausgang auf den Eingang (46) zurückgeführt wird,
wobei in der Routing-Komponente (40) ein internes Routing durchgeführt wird, sodass das Videosignal in der Routing-Komponente vom Haupteingang (42) zum Hauptausgang (43) geleitet wird, der mindestens eine erste Audiokanal in der Routing-Komponente vom Haupteingang zu dem mindestens einen ersten Ausgang geleitet wird und der mindestens eine zweite Audiokanal in der Routing-Komponente vom Haupteingang zum zweiten Ausgang geleitet wird und anschließend vom Eingang (46) zum Hauptausgang (43) geleitet wird.

3. Zusatzgerät nach Anspruch 2, wobei der zweite Ausgang außerhalb der Routing-Komponente auf den Eingang (46) zurückgeführt wird.

4. Zusatzgerät nach einem der Ansprüche 2 oder 3, wobei der mindestens eine erste Ausgang (44), der zweite Ausgang (45) und der Eingang (46) vom Typ I2S sind.

5. Zusatzgerät nach einem der vorstehenden Ansprüche, wobei die drahtlose Kommunikationsschaltung (36) so ausgelegt ist, dass sie von dem mindestens einen Audiowiedergabegerät (16; 116) über die drahtlose Verbindung (39; 139) eine Information empfängt, die ihr angibt, welcher oder welche ersten Audiokanäle an sie zu übertragen sind.

6. Zusatzgerät nach einem der vorstehenden Ansprüche, wobei die erste Kabelverbindung (31) und die zweite Kabelverbindung (38) HDMI-Verbindungen sind und wobei die drahtlose Kommunikationsschaltung (36) ein Wi-Fi- oder Bluetooth-Modul enthält.

7. Zusatzgerät nach einem der vorstehenden Ansprüche, umfassend eine Verarbeitungseinheit, die so konfiguriert ist, dass sie mindestens eine erste spezifische Verzögerung auf mindestens einen des mindestens einen ersten Audiokanals und mindestens eine zweite spezifische Verzögerung auf mindestens einen des mindestens einen zweiten Audiokanals des Mehrkanal-Audiosignals anwendet, wobei die erste(n) spezifische(n) Verzögerung(en) und die zweite(n) spezifische(n) Verzögerung(en) in Abhängigkeit von den Audiowiedergabefähigkeiten des mindestens einen Audiowiedergabegeräts (16; 116), des Audio-Video-Wiedergabegeräts (15; 115) oder einer im Decodergerät (112) integrierten internen Audiowiedergabevorrichtung (160) zur Wiedergabe durch diese Audiowiedergabevorrichtung und/oder in Abhängigkeit von Eigenschaften der zweiten Kabelverbindung (38; 138) und der drahtlosen Verbindung (39; 139) festgelegt sind.

8. Zusatzgerät nach dem vorstehenden Anspruch, wobei die Verarbeitungseinheit ferner dazu ausgelegt ist, für jeden ersten Audiokanal mindestens eine erste spezifische Verarbeitung und für jeden zweiten Audiokanal mindestens eine zweite spezifische Verarbeitung durchzuführen, wobei die erste(n) spezifische(n) Verarbeitung(en) und die zweite(n) spezifische(n) Verarbeitung(en) in Abhängigkeit von den Audiowiedergabefähigkeiten des mindestens einen Audiowiedergabegeräts (16; 116), des Audio-Video-Wiedergabegeräts (15; 115) oder der internen Audiowiedergabevorrichtung (160) des Decodergeräts (112) und/oder in Abhängigkeit von einer Audiokonfiguration des mindestens einen Audiowiedergabegeräts festgelegt sind.

9. Decodergerät (12; 112) umfassend:
- einen Ausgangsanschluss (30; 130), der so ausgelegt ist, dass er über eine erste Kabelverbindung (31; 131) mit einem Zusatzgerät (14; 114) verbunden werden kann;
- eine Verarbeitungseinheit (18; 118), die dazu ausgelegt ist:
.ein digitales Audio-Video-Signal (Sav) zu erfassen, das ein Videosignal (Sv) und ein Mehrkanal-Audiosignal (Sa) umfasst;
.mindestens eine erste spezifische Verzögerung auf mindestens einen ersten Audiokanal und mindestens eine zweite spezifische Verzögerung auf mindestens einen zweiten Audiokanal des Mehrkanal-Audiosignals anzuwenden;
.das Videosignal und den mindestens einen ersten Audiokanal über den Ausgangsanschluss (30; 130) und die erste Kabelverbindung (31; 131) an das Zusatzgerät (14; 114) zu übertragen, damit das Zusatzgerät das Videosignal über eine zweite Kabelverbindung (38; 138) an das Audio-Video-Wiedergabegerät und den mindestens einen ersten Audiokanal über eine drahtlose Verbindung (39; 139) an mindestens ein Audiowiedergabegerät (16; 116) weiterleitet;
.den mindestens einen zweiten Audiokanal über den Ausgangsanschluss und die erste Kabelverbindung an das Zusatzgerät zur Wiedergabe durch das Audio-Video-Wiedergabegerät oder an eine im Decodergerät integrierte interne Audiowiedergabevorrichtung (160) zur Wiedergabe durch diese Audiowiedergabevorrichtung zu übertragen;
wobei die erste(n) spezifische(n) Verzögerung(en) und die zweite(n) spezifische(n) Verzögerung(en) in Abhängigkeit von den Audiowiedergabefähigkeiten des mindestens einen Audiowiedergabegeräts (16; 116), des Audio-Video-Wiedergabegeräts (15; 115) oder der internen Audiowiedergabevorrichtung (160) und/oder in Abhängigkeit von den Eigenschaften der zweiten Kabelverbindung (38; 138) und der drahtlosen Verbindung (39; 139) festgelegt sind.

10. Decodergerät nach Anspruch 9, wobei die Verarbeitungseinheit (18; 118) ferner so ausgelegt ist, dass sie für jeden ersten Audiokanal mindestens eine erste spezifische Verarbeitung und für jeden zweiten Audiokanal mindestens eine zweite spezifische Verarbeitung durchführt, wobei die erste(n) spezifische(n) Verarbeitung(en) und die zweite(n) spezifische(n) Verarbeitung(en) in Abhängigkeit von den Audiowiedergabefähigkeiten des mindestens einen Audiowiedergabegeräts (16; 116), des Audio-Video-Wiedergabegeräts (15; 115) oder der internen Audiowiedergabevorrichtung (160) des Decodergeräts (112) und/oder in Abhängigkeit von einer Audiokonfiguration des mindestens einen Audiowiedergabegeräts festgelegt sind.

11. Decodergerät nach einem der Ansprüche 9 oder 10, wobei das Decodergerät (12) keine Audiowiedergabevorrichtung enthält und wobei die Verarbeitungseinheit (18) außerdem dazu ausgelegt ist, den mindestens einen zweiten Audiokanal (S1(1), S1(2)) über den Ausgangsanschluss und die erste Kabelverbindung (31) zur Wiedergabe durch das Audio-Video-Wiedergabegerät (15) an das Zusatzgerät (14) zu übertragen.

12. Decodergerät nach einem der Ansprüche 9 oder 10, wobei das Decodergerät (112) eine interne Audiowiedergabevorrichtung (160) enthält, wobei die Verarbeitungseinheit (118) ausgelegt ist, um den mindestens einen zweiten Audiokanal (S3(1)... S3(4)) an die interne Audiowiedergabevorrichtung (160) zur Wiedergabe durch diese interne Audiowiedergabevorrichtung zu übertragen, wobei die Verarbeitungseinheit (118) ferner dazu ausgelegt ist, über den Ausgangsanschluss und die erste Kabelverbindung mindestens einen zweiten virtuellen Audiokanal (S2(1), S2(2)) mit ausschließlich Nullwerten an das Zusatzgerät (114) zu übertragen.

13. System, das ein Zusatzgerät nach Anspruch 1 und ein Decodergerät nach Anspruch 9 umfasst.

14. Verfahren zur Audiowiedergabe, das in der Verarbeitungseinheit (18; 118) des Decodergeräts nach einem der Ansprüche 9 bis 12 durchgeführt wird und folgende Schritte umfasst:
- Erfassen eines digitalen Audio-Video-Signals (Sav), das ein Videosignal (Sv) und ein Mehrkanal-Audiosignal (Sa) (E1) umfasst;
- Anwenden mindestens einer ersten spezifischen Verzögerung auf mindestens einen ersten Audiokanal und mindestens einer zweiten spezifischen Verzögerung auf mindestens einen zweiten Audiokanal des Mehrkanal-Audiosignals (E2);
- Übertragen des Videosignals und des mindestens einen ersten Audiokanals über den Ausgangsanschluss (30; 130) und die erste Kabelverbindung (31; 131) an das Zusatzgerät (14; 114), damit das Zusatzgerät das Videosignal über eine zweite Kabelverbindung (38; 138) an das Audio-Video-Wiedergabegerät und den mindestens einen ersten Audiokanal über eine drahtlose Verbindung (39; 139) an mindestens ein Audiowiedergabegerät (16; 116) (E3) weiterleitet;
- Übertragen des mindestens einen zweiten Audiokanals über den Ausgangsanschluss und die erste Kabelverbindung an das Zusatzgerät zur Wiedergabe durch das Audio-Video-Wiedergabegerät (E4) oder an eine im Decodergerät integrierte interne Audiowiedergabevorrichtung (160) zur Wiedergabe durch diese Audiowiedergabevorrichtung;
wobei die erste(n) spezifische(n) Verzögerung(en) und die zweite(n) spezifische(n) Verzögerung(en) in Abhängigkeit von den Audiowiedergabefähigkeiten des mindestens einen Audiowiedergabegeräts (16; 116), des Audio-Video-Wiedergabegeräts (15; 115) oder der internen Audiowiedergabevorrichtung (160) und/oder in Abhängigkeit von den Eigenschaften der zweiten Kabelverbindung (38; 138) und der drahtlosen Verbindung (39; 139) festgelegt sind.

15. Computerprogramm, das Programmcode-Befehle zur Ausführung der Schritte des Verfahrens zur Audiowiedergabe nach Anspruch 14 umfasst, wenn das Programm auf einem Computer ausgeführt wird.

16. Computerlesbares Speichermedium, auf dem das Computerprogramm nach Anspruch 15 gespeichert ist.

## Claims

1. An accessory equipment (14; 114) comprising:
- an input port (33) arranged to be connected to a set-top-box (12; 112) by a first wired link (31; 131), and an output port (34) arranged to be connected to audio-video rendering equipment (15; 115) by a second wired link (38; 138);
- a wireless communication circuit (36);
- a routing circuit (35) arranged to:
• receiving from the set-top box, via the input port and the first wired link, a digital audio-video signal comprising a video signal (Sv) and audio channels, the audio channels comprising at least one first audio channel (S1(5)...S1(8); S2(5)...S2(8)) belonging to a multi-channel audio signal, and at least one second audio channel (S1(1), S1(2); S2(1), S2(2));
• transmitting to the wireless communication circuit (36) only the at least one first audio channel for the wireless communication circuit to transmit to at least one audio rendering equipment (16; 116) via a wireless link (39; 139);
• transmitting to the audio-video rendering equipment (15; 115) only the video signal (Sv) and the at least one second audio channel (S1(1), S1(2); S2(1), S2(2)).

2. The accessory equipment according to claim 1, wherein the routing circuit (35) comprises a routing component (40) comprising:
- a main input (42) connected to the input port of the accessory equipment, through which the video signal and the audio channels enter in the routing component, and a main output (43) connected to the output port of the accessory equipment;
- at least one first output (44) connected to the wireless communication circuit (36), and a second output (45) and an input (46), the second output being looped back to the input (46),
an internal routing being implemented in the routing component (40), such that the video signal travels through the routing component from the main input (42) to the main output (43), the at least one first audio channel travels through the routing component from the main input to the at least one first output, and the at least one second audio channel travels through the routing component from the main input to the second output, then travels from the input (46) to the main output (43).

3. The accessory equipment according to claim 2, wherein the second output is looped back to the input (46) outside the routing component.

4. The accessory equipment according to claim 2 or 3, wherein the at least one first output (44), the second output (45) and the input (46) are of the I2S type.

5. The accessory equipment according to any one of the preceding claims, wherein the wireless communication circuit (36) is arranged to receive of the at least one audio rendering equipment (16; 116), via the wireless link (39; 139), information indicating the first audio channel or channels to be transmitted to it.

6. The accessory equipment according to any one of the preceding claims, wherein the first wired link (31) and the second wired link (38) are HDMI links, and wherein the wireless communication circuit (36) integrates a Wi-Fi or Bluetooth module.

7. The accessory equipment according to any one of the preceding claims, comprising a processing unit configured to apply at least one first specific delay to at least one of said at least one first audio channel and at least one second specific delay to at least one of said at least one second audio channel of the multi-channel audio signal, the at least one first specific delay(s) and the at least one second specific delay(s) being defined depending on audio rendering capabilities of the at least one audio rendering equipment (16; 116), of the audio-video rendering equipment (15; 115) or of an internal audio rendering device (160) integrated in the set-top box (112) for its rendering by said audio rendering device, and/or depending on features of the second wired link (38; 138) and of the wireless link (39; 139).

8. The accessory equipment according to the preceding claim, wherein the processing unit is further arranged to implement at least one first specific processing operation for each first audio channel and at least one second specific processing operation for each second audio channel, the first specific processing operation(s) and the second specific processing operation(s) being defined depending on the audio rendering capabilities of the at least one audio rendering equipment (16; 116), of the audio-video rendering equipment (15; 115) or of the internal audio rendering device (160) of the set-top box (112), and/or depending on an audio configuration of the at least one audio rendering equipment.

9. A set-top box (12; 112), comprising:
- an output port (30; 130) arranged to be connected to an accessory equipment (14; 114) via a first wired link (31; 131);
- a processing unit (18; 118) arranged to:
• acquiring a digital audio-video signal (Sav) comprising a video signal (Sv) and a multi-channel audio signal (Sa);
• applying at least one first specific delay to at least one first audio channel and at least one second specific delay to at least one second audio channel of the multi-channel audio signal;
• transmitting the video signal and the at least one first audio channel to the accessory equipment (14; 114) via the output port (30; 130) and the first wired link (31; 131), so that the accessory equipment retransmits the video signal to the audio-video rendering equipment via a second wired link (38; 138) and the at least one first audio channel to at least one audio rendering equipment (16; 116) via a wireless link (39; 139);
• transmitting the at least one second audio channel to the accessory equipment via the output port and the first wired link for its rendering by the audio-video rendering equipment, or else to an internal audio rendering device (160) integrated in the set-top box for its rendering by said audio rendering device;
the first specific delay(s) and the second specific delay(s) being defined depending on audio rendering capabilities of the at least one audio rendering equipment (16; 116), of the audio-video rendering equipment (15; 115) or the internal audio rendering device (160), and/or depending on features of the second wired link (38; 138) and the wireless link (39; 139).

10. The set-top-box according to claim 9, the processing unit (18; 118) being further arranged to implement at least one first specific processing operation for each first audio channel and at least one second specific processing operation for each second audio channel,
the first specific processing operation(s) and the second specific processing operation(s) being defined depending on the audio rendering capabilities of the at least one audio rendering equipment (16; 116), of the audio-video rendering equipment (15; 115) or the internal audio rendering device (160) of the set-top box (112), and/or depending on an audio configuration of the at least one audio rendering equipment.

11. The set-top-box according to any one of claims 9 or 10, wherein the set-top-box (12) does not integrate an audio rendering device, and wherein the processing unit (18) is also arranged to transmit the at least one second audio channel (S1(1), S1(2)) to the accessory equipment (14) via the output port and the first wired link (31) for its rendering by the audio-video rendering equipment (15).

12. The set-top-box according to any one of claims 9 or 10, wherein the set-top-box (112) integrates an internal audio rendering device (160), the processing unit (118) being arranged to transmit the at least one second audio channel (S3(1)...S3(4)) to the internal audio rendering device (160) for its rendering by said internal audio rendering device, the processing unit (118) being further arranged to transmit to the accessory equipment (114), via the output port and the first wired link, at least one second virtual audio channel (S2(1), S2(2)) comprising only zero values.

13. A system comprising an accessory equipment according to claim 1, and a set-top box according to claim 9.

14. An audio rendering method, implemented in the processing unit (18; 118) of the set-top box according to any one of claims 9 to 12, and comprising the steps of:
- acquiring a digital audio-video signal (Sav) comprising a video signal (Sv) and a multi-channel audio signal (Sa) (E1);
- applying at least one first specific delay to at least one first audio channel and at least one second specific delay to at least one second audio channel of the multi-channel audio signal (E2);
- transmitting the video signal and the at least one first audio channel to the accessory equipment (14; 114) via the output port (30; 130) and the first wired link (31; 131), so that the accessory equipment retransmits the video signal to the audio-video rendering equipment via a second wired link (38; 138) and the at least one first audio channel to at least one audio rendering equipment (16; 116) via a wireless link (39; 139) (E3);
- transmitting the at least one second audio channel to the accessory equipment via the output port and the first wired link for its rendering by the audio-video rendering equipment (E4), or else to an internal audio rendering device (160) integrated in the set-top box for its rendering by said audio rendering device;
the first specific delay(s) and the second specific delay(s) being defined depending on audio rendering capabilities of the at least one audio rendering equipment (16; 116), of the audio-video rendering equipment (15; 115) or the internal audio rendering device (160), and/or depending on features of the second wired link (38; 138) and the wireless link (39; 139).

15. A computer program comprising program code instructions for the execution of the steps of the audio rendering method according to claim 14 when said program is executed on a computer.

16. A computer-readable storage medium, on which is recorded the computer program according to claim 15.
